# EUROPÄISCHE PATENTSCHRIFT

(11) **EP 1 383 998 B1**
(45) Veröffentlichungstag und Bekanntmachung des Hinweises auf die Patenterteilung: **28.07.2004**
(21) Anmeldenummer: 02727231.9
(22) Anmeldetag: 15.03.2002
(51) Int. Cl.: F02M 25/08, F16K 31/06

(54) **VENTIL MIT FILTER**
VALVE COMPRISING A FILTER
SOUPAPE AVEC FILTRE

(30) Priorität: 16.03.2001 DE 10112663
(43) Veröffentlichungstag der Anmeldung: 28.01.2004
(73) Patentinhaber: ROBERT BOSCH GMBH, 70442 Stuttgart (DE)
(72) Erfinder: KRIMMER, Erwin, 73655 Pluederhausen (DE); SCHULZ, Wolfgang, 74321 Bietigheim-Bissingen (DE); MEISIEK, Achim, 73635 Rudersberg (DE)
(86) Internationale Anmeldenummer: PCT/DE2002/000953
(87) Internationale Veröffentlichungsnummer: WO 2002/075142

(56) Entgegenhaltungen:
- DE-A- 19 516 545
- DE-B- 1 001 073
- US-A- 6 058 913

## Beschreibung

### Stand der Technik

Die Erfindung geht aus von einem Ventil mit Filter nach der Gattung des Anspruchs 1.

Aus der DE 199 01 090 A1 ist ein Magnetventil bekannt, das eine Schmutzfängereinrichtung aufweist. Diese Schmutzfängereinrichtung ist dabei konzentrisch um eine Ankerplatte des Ventils angeordnet und vergrössert so den radialen Bauraum. Ausserdem wird ein Öffnungsquerschnitt für einströmendes Regeneriergas zur Lavaldüse hin begrenzt.

Die DE 195 16 545 A1 zeigt ein Ventil zum dosierten Einleiten von verflüchtigtem Brennstoff, bei dem ein Filter als separates Bauteil in der Nähe des Einlasses eingebaut ist. Der Filter muss gegen eine Gehäusewand und einen Magnetkern abgedichtet werden.

### Vorteile der Erfindung

Das erfindungsgemässe Ventil mit den kennzeichnenden Merkmalen des Anspruchs 1 hat demgegenüber den Vorteil, dass auf einfache Art und Weise ein Filter im Ventil angeordnet ist, das den radialen Bauraum verkleinert. Ein grösserer Öffnungsquerschnitt für einströmendes Regeneriergas zur Lavaldüse bedeutet auch weniger Druckabfall im Filter.

Durch die in den abhängigen Ansprüchen aufgeführten Massnahmen sind vorteilhafte Weiterbildungen und Verbesserungen des im Anspruch 1 genannten Ventils möglich.

Durch die Anordnung des Filters am Boden des Gehäuses wird auf vorteilhafte Weise ein kleineres radiales Bauvolumen erreicht.

Der Filter ist auf vorteilhafte Weise labyrinthartig aufgebaut. Dabei besteht der Filter in vorteilhafter Weise aus Stegen, die immer so angeordnet sind, dass sich zwischen ihnen ein Schlitz bildet, der zumindest teilweise einen Maximalabstand aufweist, wodurch Fremdpartikel an diesem Schlitz hängenbleiben.

### Zeichnung

Ausführungsbeispiele der Erfindung sind in der Zeichnung vereinfacht dargestellt und in der nachfolgenden Beschreibung näher erläutert.

Es zeigen
Figur 1 ein erfindungsgemässes Ventil,
Figur 2a ein Gehäuseteil mit einem Filter eines erfindungsgemäss ausgebildeten Ventils, Figur 2b, 2c jeweils einen Teilbereich eines Gehäuseteils mit je einem unterschiedlichen Filter.

### Beschreibung der Ausführungsbeispiele

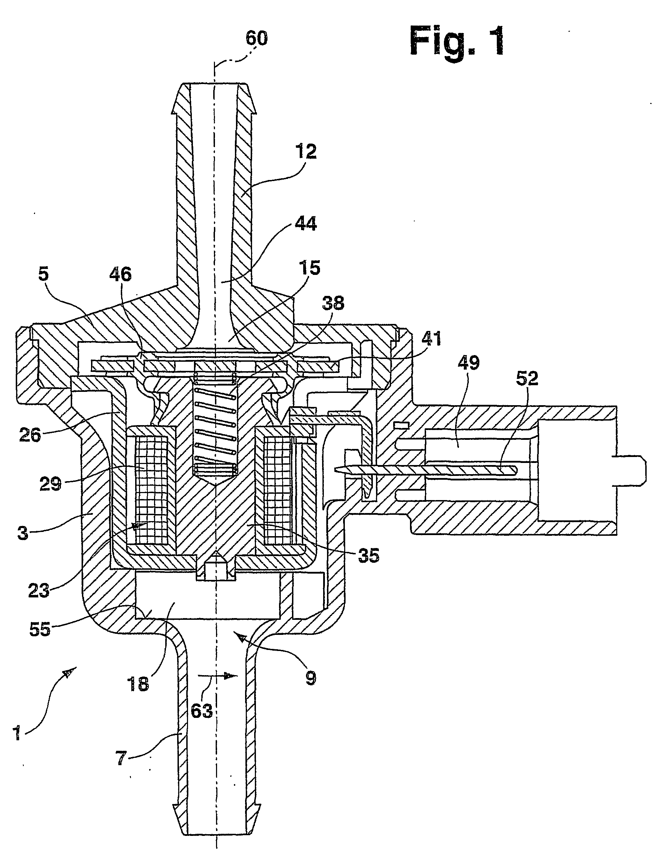

Ein in Figur 1 im Längsschnitt dargestelltes Tankentlüftungsventil als Ausführungsbeispiel für ein beliebiges Ventil, bspw. ein Magnetventil, dient zum dosierten Zumischen von aus einem Brennstofftank einer (nicht dargestellten) gemischverdichteten fremdgezündeten Brennkraftmaschine verflüchtigtem Brennstoff in die Brennkraftmaschine, z.B. in ein Ansaugrohr oder bei einer Benzin-Direkteinspritzung direkt in einen Zylinder der Brennkraftmaschine und ist Teil eines nicht näher dargestellten Brennstoffverdunstungs-Rückhaltesystems einer Brennkraftmaschine. Der Aufbau und die Funktion derartiger Brennstoffverdunstungs-Rückhaltesysteme ist beispielsweise der "Bosch-Technische Unterrichtung Motormanagement Motronic", zweite Ausgabe, August 1993, Seiten 48 und 49, zu entnehmen. Ein Tankentlüftungsventil und dessen Funktion geht beispielsweise auch aus der DE 199 01 090 A1, die ausdrücklich Bestandteil dieser Offenbarung sein soll, hervor.

Das Tankentlüftungsventil 1 weist mehrere Gehäuseteile, beispielsweise ein zweiteiliges Gehäuse mit einem ersten Gehäuseteil 3, das beispielsweise topfförmig ausgebildet ist, und ein dieses abschliessendes, beispielsweise kappenförmiges Gehäuseteil 5 auf. Das Gehäuseteil 3 weist einen Einlass 7 zum Anschliessen an einen Entlüftungsstutzen des Brennstofftanks oder an einen diesem nachgeschalteten, mit Aktivkohle gefüllten Speicher für den Verflüchtigungsbrennstoff auf. Der Einlass 7 hat eine Einlassöffnung 9, die im Bereich eines Bodens 55 des Gehäuseteils 3 angeordnet ist.
Das Gehäuseteil 5 weist ein Auslass 12 zum Anschliessen an z.B. das Ansaugrohr der Brennkraftmaschine auf. Der Einlass 7 und der Auslass 12 sind jeweils an den Gehäuseteilen 3 oder 5 beispielsweise entlang einer Axialrichtung 60 ausgerichtet.

Im Inneren des topfförmigen Gehäuseteils 3 ist ein Elektromagnet 23 angeordnet. Der Elektromagnet 23 weist ein beispielsweise topfförmiges Magnetgehäuse 26 mit einem den Topfboden durchdringenden, zur Ventilachse koaxialen, zylindrischen Magnetkern 35 und mit einer zylindrischen Erregerspule 29 auf, die auf einem Spulenträger 32 sitzt, der im Magnetgehäuse 26 den Magnetkern 35 umschliesst.
Auf seiner dem Auslass 12 zugewandten Seite ist eine entgegen der Rückstellkraft einer Rückstellfeder 38 verstellbare Ankerplatte 41 vorgesehen, die von dem Elektromagneten 23 angezogen wird und ein Ventilglied bildet, das an einem an dem Gehäuseteil 5 direkt oder indirekt angeordneten Dichtsitz zur Anlage kommt.
Der Auslass 12 weist ein Strömungselement 44 in Form einer Lavaldüse auf. Es versteht sich jedoch, dass das Strömungselement 44 nicht auf eine Lavaldüse beschränkt ist und auch als Blende oder Drossel ausgebildet sein kann. Das Strömungselement 44 ist so ausgebildet, dass die Fläche seines engsten Strömungsquerschnitts kleiner ist als die Fläche des Öffnungsquerschnitts des Dichtsitzes.
An der Ankerplatte 41 ist weiterhin eine Membran 46 angeordnet.
Das Gehäuse 3, 5 weist beispielsweise einen einteilig mit dem Gehäuse 3, 5 verbundenen Stecker 49 auf, der elektrische Anschlusselemente 52 zum Anschluss an äussere Steckkontakte aufweist.

An dem Boden 55 des Gehäuseteils 3 in der Nähe der Einlassöffnung 9 ist ein Filter 18 angeordnet.
Das Medium, das beispielsweise Partikel aus dem Aktivkohlefilter enthalten kann, strömt durch die Einlassöffnung 9 und durch den Filter 18, der diese Partikel zurückhält, an dem Magnetgehäuse 26 vorbei hin zum Dichtsitz und bei abgehobener Ankerplatte 41 zum Auslass 12.

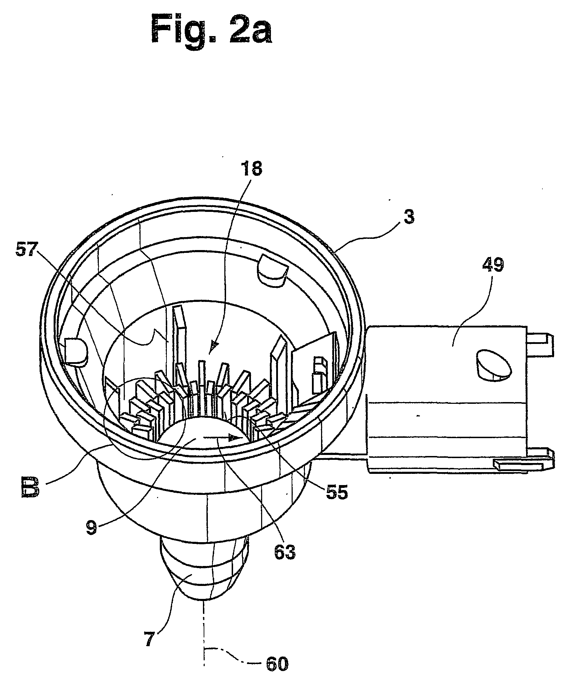

Figur 2a zeigt das erste Gehäuseteil 3 des erfindungsgemäss ausgebildeten Ventils 1 mit dem Filter 18. Der Filter 18 ist in der Nähe der Einlassöffnung 9 angeordnet. Das erste Gehäuseteil 3 weist den Boden 55 auf, der in einer Radialrichtung 63 nach aussen durch eine Gehäusewand 57 des Gehäuseteils 3 begrenzt ist. Zur Mitte hin ist der Boden 55 durch die Einlassöffnung 9 begrenzt. Der Filter 18 ist beispielsweise am Boden 55 angeordnet. Ebenso ist der Filter 18 einteilig mit dem Gehäuse 3, d.h. er wird bspw. mit der Herstellung des Gehäuses 3 gefertigt.
Das Magnetgehäuse 26 liegt bspw. zumindest teilweise auf dem Filter 18 auf. Der Filter 18 ist bspw. labyrinthartig aufgebaut.

Figur 2b zeigt eine vergrösserte Darstellung eines mit B gekennzeichneten Kreises in Figur 2a.
Der Filter 18 weist zumindest einen Kanal 65 und zumindest einen Schlitz 68 auf, durch die das Medium strömt, wobei an den Schlitzen 68 Schmutzpartikel in gewünschter Weise hängenbleiben.
Der Filter 18 besteht aus zumindest zwei bspw. plättchenförmigen, ovalen, runden oder ähnlich ausgebildeten Stegen 71, die sich in Axialrichtung 60 erstrecken und die so angeordnet sind, dass sie den Schlitz 68 bilden. Der Schlitz 68 hat bspw. eine Breite von circa 0,2 Millimeter, so dass Partikel grösser als 0,2 Millimeter an dem Schlitz 68 hängenbleiben. Mit der Schlitzbreite wird eine Mindestrückhaltegrösse für Fremdpartikel bestimmt.

Die Stege 71 sind dabei beispielsweise wie folgt angeordnet. Zumindest zwei äussere Stege 73 erstrecken sich von der Gehäusewand 57 an oder in der Nähe der Gehäusewand 57 beginnend, konzentrisch angeordnet, in radialer Richtung 63 zu einer Einlassöffnung 9. Dabei haben sie in Axialrichtung 60 eine bestimmte Höhe h und senkrecht dazu eine Breite b. Der äussere Steg 73 erstreckt sich radial bis zu einer Länge 1 und damit auf dem Gehäuseboden 55 teilweise bis zur Einlassöffnung 9. Die äusseren Stege 73 sind in Umfangsrichtung an dem oder nahe dem gesamten Umfang der Gehäusewand 57 im gleichmässigen Abstand voneinander angeordnet.
Zwischen zwei direkt benachbarten äusseren Stegen 73 wird ein Kanal 65 gebildet.
Radial zu den äusseren Stegen 73 versetzt angeordnet sind innere Stege 75, die teilweise in den Kanal 65 der äusseren Stege 73 hineinragen können. Die inneren Stege 75 sind in ihrer Form ähnlich der der äusseren Stege 73 ausgebildet und ebenfalls in Umfangrichtung konzentrisch um die Einlassöffnung 9 angeordnet. Die inneren Stege 75 sind im Abstand von der Gehäusewand 57 angeordnet und können sich dabei bis zu der Einlassöffnung 9 erstrecken.
Zwischen den direkt benachbarten inneren Stegen 75 wird ebenfalls der Kanal 65 gebildet.
Zwischen zwei äusseren Stegen 73 und einem inneren Steg 75 wird der sich in axialer Richtung 60 erstreckende Schlitz 68 gebildet, der zumindest an einer Stelle höchstens einen Maximalabstand aufweist. Somit ist der Schlitz 68 an jeder anderen Stelle kleiner oder gleich dem Maximalabstand, wodurch eine Untergrenze für eine Partikelgrösse festgelegt ist, die mindestens zurückgehalten wird.

Das Medium strömt aus der Einlassöffnung 9 durch zumindest einen Kanal 65 der inneren Stege 75 durch einen Schlitz 68 in einen Kanal 65 der äusseren Stege 73. Im Schlitz 68 werden die Fremdpartikel festgehalten. Die Stege 73, 75 weisen in Axialrichtung eine gleiche Höhe h auf. Nur ein Teil der Stege 73, 75, wenigstens drei haben eine Höhe, die um den Maximalabstand von z.B. 0,2 mm bzw. Schlitzbreite größer als h ist, so dass das Magnetgehäuse 26 auf diesen höheren Stegen 73, 75 lagert.

Der Filter 18 kann auch so ausgebildet sein, dass er aus stiftförmigen Stegen 71 besteht, die regelmäßig oder unregelmäßig am Boden 55 angeordnet sind und einen Maximalabstand von z.B. 0,2 mm zueinander haben. Andererseits kann der Filter 18 auch anstelle der inneren und äußeren Stege nur durch eine Reihe in Umfangsrichtung der Gehäusewand 57 nebeneinander angeordneter Stege 71 gebildet werden, die zwischen sich einen Maximalabstand von z.B. höchstens 0,2 mm haben.

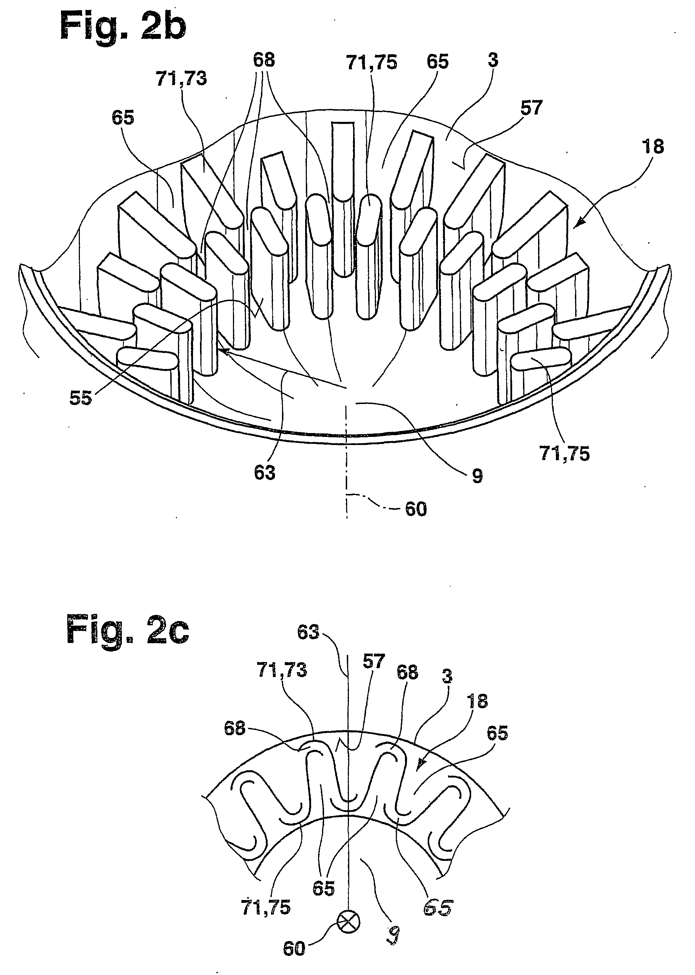

Figur 2c zeigt eine weitere Ausführungsform des Filters 18. Die Stege 71, 73, 75 sind im Vergleich zu Figur 2b gebogen, beispielsweise S-förmig ausgebildet. Dabei bilden zwei direkt benachbarte Stege 73, 75 einen Kanal 65 durch den das Medium von der Einlassöffnung 9 strömt, um durch den Schlitz 68 Richtung Gehäusewand 57 zu gelangen. Von dort aus strömt es entlang der Gehäusewand 57 in Richtung zum Auslass 12. Die äusseren Stege 73 bilden beispielsweise mit der Gehäusewand 57 ebenfalls einen Schlitz 68.

## Patentansprüche

1. Ventil, insbesondere zur Tankentlüftung bei Kraftfahrzeugen mit einer Brennkraftmaschine,
mit einem Gehäuse, an dem
ein Einlass und
ein Auslass angeordnet ist,
zwischen denen zumindest zeitweise ein Medium strömt, das Schmutzpartikel enthält,
mit einem Filter, der die Schmutzpartikel herausfiltert,
**dadurch gekennzeichnet,**
**dass** der Filter (18) in dem Gehäuse (3,5) in der Nähe des Einlasses (7) angeordnet ist, und
**dass** der Filter (18) einteilig mit dem Gehäuse (3,5) ist.

2. Ventil nach Anspruch 1,
**dadurch gekennzeichnet, dass**
der Filter (18) an einem Boden (55) des Gehäuses (3,5) angeordnet ist.

3. Ventil nach Anspruch 1 oder 2,
**dadurch gekennzeichnet, dass**
der Filter (18) labyrinthartig aufgebaut ist.

4. Ventil nach Anspruch 3,
**dadurch gekennzeichnet,**
**dass** das Ventil (1) eine Axialrichtung (60) aufweist,
**dass** der Filter (18) aus zumindest zwei Stegen (71) besteht, die sich in Axialrichtung (60) erstrecken,
wobei die direkt benachbarten Stege (71) zumindest einen Schlitz (68) bilden, der zumindest teilweise höchstens eine Maximalbreite aufweist.

5. Ventil nach Anspruch 3,
**dadurch gekennzeichnet,**
**dass** das Ventil (1) eine Axialrichtung (60) aufweist, und
**dass** der Filter (18) aus zumindest zwei Stegen (71) besteht, die sich in Axialrichtung (60) erstrecken, und
**dass** zumindest ein Steg (71) und eine Gehäusewand (57) zumindest einen Schlitz (68) bilden, der zumindest teilweise eine Maximalbreite aufweist, und
**dass** die direkt benachbarten Stege (71) zumindest einen Schlitz (68) bilden, der zumindest teilweise höchstens eine Maximalbreite aufweist.

6. Ventil nach Anspruch 4,
**dadurch gekennzeichnet,**
**dass** zumindest zwei äussere Stege (71, 73) sich von einer oder nahe einer Gehäusewand (57) in radialer Richtung (63) nach innen teilweise zur Einlassöffnung (9) erstrecken, und
**dass** sich zumindest ein innerer Steg (71, 75) beginnend in einem Abstand von der Gehäusewand (57) höchstens bis zu einer Einlassöffnung (9) in radialer Richtung (63) nach innen erstreckt, und
**dass** zumindest ein innerer Steg (75) so zwischen den zwei äusseren Stegen (73) angeordnet ist, dass zwei Schlitze (68) gebildet sind, die zumindest teilweise höchstens eine Maximalbreite aufweisen.

7. Ventil nach Anspruch 1,
**dadurch gekennzeichnet, dass**
das Ventil (1) ein Magnetventil ist.

## Claims

1. Valve, in particular for fuel-tank ventilation in motor vehicles
having an internal combustion engine,
having a housing on which
an inlet and
an outlet are arranged,
between which a medium which contains dirt particles flows, at least intermittently,
having a filter which filters out the dirt particles,
**characterized**
**in that** the filter (18) is arranged in the housing (3, 5) in the vicinity of the inlet (7), and
**in that** the filter (18) is integral with the housing (3, 5).

2. Valve according to Claim 1,
**characterized in that**
the filter (18) is arranged on a base (55) of the housing (3, 5).

3. Valve according to Claim 1 or 2,
**characterized in that**
the filter (18) is constructed in the manner of a labyrinth.

4. Valve according to Claim 3,
**characterized**
**in that** the valve (1) has an axial direction (60),
**in that** the filter (18) comprises at least two webs (71) which extend in the axial direction (60),
the directly adjacent webs (71) forming at least one slot (68) which has, at least in part, at most a maximum width.

5. Valve according to Claim 3,
**characterized**
**in that** the valve (1) has an axial direction (60), and
**in that** the filter (18) comprises at least two webs (71) which extend in the axial direction (60), and
**in that** at least one web (71) and a housing wall (57) form at least one slot (68) which has, at least in part, a maximum width, and
**in that** the directly adjacent webs (71) form at least one slot (68) which has, at least in part, at most a maximum width.

6. Valve according to Claim 4,
**characterized**
**in that** at least two outer webs (71, 73) extend from or in the vicinity of a housing wall (57) in the radial direction (63) in part inwards towards the inlet opening (9), and
**in that** at least one inner web (71, 75), beginning at a distance from the housing wall (57), extends inwards in the radial direction (63) at most as far as an inlet opening (9), and
**in that** at least one inner web (75) is arranged between the two outer webs (73) in such a manner that two slots (68) are formed, the slots having, at least in part, at most a maximum width.

7. Valve according to Claim 1,
**characterized in that**
the valve (1) is a solenoid valve.

## Revendications

1. Soupape, en particulier pour purger l'air du réservoir de carburant dans des véhicules automobiles dotés d'un moteur à combustion interne,
comportant un boîtier, au niveau duquel sont disposées une admission et une évacuation, entre lesquelles s'écoule au moins par intermittence un fluide qui contient des particules de poussière,
et comportant un filtre qui filtre les particules de poussière,
**caractérisée en ce que**
le filtre (18) est disposé dans le boîtier (3, 5) à proximité de l'admission (7), et
le filtre (18) est fait d'une seule pièce avec le boîtier (3, 5).

2. Soupape selon la revendication 1,
**caractérisée en ce que**
le filtre (18) est disposé au niveau d'un fond (55) du boîtier (3, 5).

3. Soupape selon la revendication 1 ou 2,
**caractérisée en ce que**
le filtre (18) est conçu à la façon d'un labyrinthe.

4. Soupape selon la revendication 3,
**caractérisée en ce que**
la soupape (1) présente une direction axiale (60), et
le filtre (18) se compose d'au moins deux traverses (71) qui s'étendent dans la direction axiale (60), les traverses directement voisines (71) formant au moins une fente (68) qui présente au moins en partie au maximum une largeur maximale.

5. Soupape selon la revendication 3,
**caractérisée en ce que**
la soupape (1) présente une direction axiale (60),
le filtre (18) se compose d'au moins deux traverses (71) qui s'étendent dans la direction axiale (60),
au moins une traverse (71) et une paroi de boîtier (57) forment au moins une fente (68) qui présente au moins en partie une largeur maximale, et
les traverses directement voisines (71) forment au moins une fente (68) qui présente au moins en partie au maximum une largeur maximale.

6. Soupape selon la revendication 4,
**caractérisée en ce que**
au moins deux traverses extérieures (71, 73) s'étendent en partie vers l'intérieur en direction radiale (63), à partir d'une ou à proximité d'une paroi de boîtier (57) vers l'orifice d'admission (9),
au moins une traverse intérieure (71, 75) s'étend vers l'intérieur en direction radiale (63), en partant à une certaine distance de la paroi de boîtier (57) pour aller au maximum jusqu'à un orifice d'admission (9), et au moins une traverse intérieure (75) est disposée entre les deux traverses extérieures (73) de manière à former deux fentes (68), qui présentent au moins en partie au maximum une largeur maximale.

7. Soupape selon la revendication 1,
**caractérisée en ce que**
la soupape (1) est une électrovanne.
